# EUROPÄISCHE PATENTANMELDUNG

(11) **EP 4 632 425 A1**
(43) Veröffentlichungstag der Anmeldung: **15.10.2025**
(21) Anmeldenummer: 25168899.0
(22) Anmeldetag: 07.04.2025
(51) Int. Cl.: G01S 7/40, G01S 13/34, G01F 23/284

(54) **RADAR-MESSGERÄT**

(30) Priorität: 09.04.2024 DE 102024109825
(71) Anmelder: VEGA Grieshaber KG, 77709 Wolfach (DE)
(72) Erfinder: RAUER, Winfried, 77716 Fischerbach (DE); MÜLLER, Christoph, 77728 Oppenau (DE)
(74) Vertreter: Maiwald GmbH

(57) **Zusammenfassung**

Radar-Messgerät zur Prozessautomatisierung im industriellen oder privaten Umfeld, mit einer Steuereinheit zum Berechnen einer mittleren Sendeleistung eines während eines Messintervalls abzustrahlenden Radar-Messsignals und einer Aufteilung des Messintervalls in mehrere aufeinanderfolgende Teil-Messintervalle, wenn die berechnete mittlere Sendeleistung größer ist als die voreingestellte Schwellwertleistung.

## Beschreibung

### Bezugnahme auf verwandte Anmeldungen

Die vorliegende Anmeldung beansprucht die Priorität der deutschen Patentanmeldung Nr. 10 2024 109 825.2, eingereicht am 9. April 2025, die in vollem Umfang durch Bezugnahme in das vorliegende Dokument aufgenommen wird.

### Technisches Gebiet

Die vorliegende Offenbarung betrifft die Prozessautomatisierung im industriellen oder privaten Umfeld. Insbesondere betrifft die vorliegende Offenbarung ein Radar-Messgerät zur Prozessautomatisierung im industriellen oder privaten Umfeld, eine Verwendung eines solchen Radar-Messgeräts, ein Verfahren zum Messen mit einem Radar-Messgerät, ein Programmelement und ein computerlesbares Medium.

### Hintergrund

Bei Radar-Messgeräten zur Prozessautomatisierung im industriellen oder privaten Umfeld, insbesondere in der Füllstand-Messtechnik, aber auch in der Fertigungsautomatisierung, sollte darauf geachtet werden, dass die mittlere, vom Radar-Messgerät abgestrahlte HF-Sendeleistung eine vorgegebene Schwellwertleistung nicht übersteigt. Maßgeblich hierfür kann insbesondere die mittlere abgestrahlte Sendeleistung sein, die während eines Messintervalls des Radar-Messgeräts abgestrahlt wird.

Zur Anpassung der Sendeleistung kann diese vom Benutzer abgesenkt werden, je nachdem, wo das Radar-Messgerät zum Einsatz kommt.

### Zusammenfassung

Es ist eine Aufgabe der vorliegenden Offenbarung, ein Radar-Messgerät anzugeben, welches eine maximale vorgegebene Sendeleistung im zeitlichen Mittel nicht übersteigt.

Diese Aufgabe wird durch die Merkmale der unabhängigen Patentansprüche gelöst. Weiterbildungen der Erfindung ergeben sich aus den Unteransprüchen und der folgenden Beschreibung von Ausführungsformen.

Ein erster Aspekt der vorliegenden Offenbarung betrifft ein Radar-Messgerät, eingerichtet zur Prozessautomatisierung im industriellen oder privaten Umfeld. Das Radar-Messgerät weist insbesondere eine Steuereinheit auf, die eingerichtet ist zum Berechnen einer mittleren Sendeleistung eines während eines Messintervalls abzustrahlenden Radar-Messsignals.

Die Steuereinheit ist eingerichtet, die berechnete mittlere Sendeleistung mit einer voreingestellten Schwellwertleistung zu vergleichen und das Messintervall daraufhin in mehrere aufeinanderfolgende Teil-Messintervalle (Teil-Sweeps) aufzuteilen, wenn die berechnete mittlere Sendeleistung größer ist als die voreingestellte Schwellwertleistung.

Die aufeinanderfolgenden Teil-Messintervalle sind hierbei durch jeweils eine Messpause voneinander getrennt, um die mittlere Sendeleistung des abzustrahlenden Radar-Messsignals zu verringern, so dass sie unter den voreingestellten Schwellwert fällt.

Unter dem Begriff "Messintervall" kann ein Zeitintervall verstanden werden, während dem ein Messzyklus durchgeführt wird, beispielsweise in Form eines Frequenzsweeps beziehungsweise Frequenzdurchlaufs im Falle eines FMCW-Radar-Messgeräts (FMCW: Frequency Modulated Continuous Wave). Im Falle eines Puls-Radar-Messsignals entspricht somit das Messintervall dem Zeitintervall, während dem ein Radarpuls ausgesendet (und wieder empfangen) wird.

Ist das Messintervall durchlaufen, wurde somit eine Echokurve erfasst, woraus sich beispielsweise ein Füllstand berechnen lässt.

Die (berechnete) mittlere Sendeleistung entspricht hierbei der in diesem Messintervall durchschnittlich abgestrahlten Sendeleistung des Radar-Messsignals.

In anderen Worten wird also eine Messung in mehrere Teil-Messungen zerlegt, die dann im Anschluss per Software wieder zu einer kompletten Vollmessung zusammengesetzt werden können.

Die Aufteilung des Messintervalls in mehrere aufeinanderfolgende Teil-Messintervalle oder Teil-Sweeps kann abhängig sein von nationalen Anforderungen (die mittels GPS und/oder Landeseingabe vom Radar-Messgerät, ggf. über eine Datenbankabfrage in der Cloud oder gespeicherte Daten im Radar-Messgerät selbstständig festgestellt werden können), Das Radar-Messgerät kann eingerichtet sein, dieses selbstständig zu vorzunehmen und die Festlegung der Teil-Messintervalle selbst vorzunehmen. Hierfür kann eine KI vorgesehen sein.

Es kann vorgesehen sein, dass das Radar-Messgerät an eine 4..20 mA Versorgung ("Schleife" oder "Loop") angeschlossen ist. Es kann insbesondere vorgesehen sein, dass die Versorgung des Radar-Messgeräts ausschließlich aus dieser Schleife erfolgt.

Insbesondere kann das Radar-Messgerät auch als Batterie-betriebener Sensor ausgeführt sein. Auch in diesem Fall kann die gültige Funkzulassung das beschriebene Vorgehen mit Sweepaufteilung erforderlich machen.

Gemäß einer Ausführungsform der vorliegenden Offenbarung weist das Radar-Messgerät ein Radarmodul auf, das eingerichtet ist zum Erzeugen und Abstrahlen des Radar-Messsignals während der aufeinanderfolgenden Teil-Messintervalle.

Insbesondere kann das Radar-Messgerät als FMCW-Radar-Messgerät ausgeführt sein.

Bei FMCW-Radar-Messgeräten ist es oft nicht oder nur unter erheblichem Aufwand möglich, einen Frequenzsweep (Frequenzdurchlauf) aufgrund von maximal möglichen Abtastraten des Analog-Digital-Wandlers, auftretenden ZF(Zwischenfrequenz)-Frequenzen oder maximal realisierbaren Rampenstelleinheiten so kurz auszuführen, dass die Vorschriften der maximal zulässigen mittleren Sendeleistung auch mit maximal möglicher Sendeleistung noch erfüllt werden.

Wie oben beschrieben, kann jedoch der Frequenzsweep auch dann so ausgeführt werden, dass die Anforderungen an die maximal erlaubte abgesendete mittlere HF-Sendeleistung erfüllt werden. Je nach maximal möglicher Sendeleistung des abzustrahlenden Radar-Messsignals wird durch geeignete Maßnahmen (mitigationtechniques) die mittlere Leistung entsprechend abgesenkt.

Dies erfolgt durch Aufteilen des Frequenzsweeps in mehrere kurze Abschnitte (TeilSweeps oder Teil-Messintervalle), die im Anschluss per Software wieder zu einem kompletten Sweep zusammengesetzt werden können.

Die Steuereinheit ist gemäß einer Ausführungsform eingerichtet, die Anzahl der Teil-Messintervalle in Abhängigkeit von der Größe des Frequenzhubs des gesamten Frequenzdurchlaufs des Messintervalls und/oder in Abhängigkeit von der maximalen Sendeleistung des abzustrahlenden Radar-Messsignals festzulegen, wenn das Messintervall in mehrere aufeinanderfolgende Teil-Messintervalle aufgeteilt wird.

Gemäß einer weiteren Ausführungsform der vorliegenden Offenbarung ist die Steuereinheit eingerichtet, die Länge der Messpause zwischen aufeinanderfolgenden Teil-Messintervallen in Abhängigkeit von der Größe des Frequenzhubs des gesamten Frequenzdurchlaufs des Messintervalls und/oder in Abhängigkeit von der maximalen Sendeleistung des abzustrahlenden Radar-Messsignals festzulegen, wenn das Messintervall in mehrere aufeinanderfolgende Teil-Messintervalle aufgeteilt wird.

Gemäß einer weiteren Ausführungsform der vorliegenden Offenbarung ist die Steuereinheit eingerichtet, die Steigerung der Frequenzrampe des Frequenzdurchlaufs zu verringern, wenn das Messintervall in mehrere aufeinanderfolgende Teil-Messintervalle aufgeteilt wird.

Je nach Größe des Frequenzhubs kann in unterschiedlich viele Teil-Sweeps aufgeteilt werden, um mit entsprechender Pause zwischen den Teil-Sweeps die Anforderungen an die maximal mögliche mittlere HF-Ausgangssendeleistung zu erfüllen.

Vorteilhaft ist bei einem solchen Verfahren, dass die Teil-Sweeps auch mit geringerer Rampensteilheit erfolgen können. Somit sind auch Radarsysteme mit relativ langsamen AD-Wandlern, hoher Punktanzahl (also einer hohen Anzahl an Abtastwerten) und dadurch langen Sweepzeiten realisierbar.

Vorteilhaft ist auch, dass der erforderliche Energiespeicher (zum Beispiel Speicherkondensator) im Radar-Messgerät bei kurzen Sweeps oder Teil-Sweeps kleiner dimensioniert werden kann.

Die Sweep-Aufteilung in mehrere aufeinanderfolgende Teil-Messintervalle hat auch Vorteile bezüglich des Powermanagements insgesamt, da die Lastsprünge kleiner beziehungsweise kürzer werden und feiner geregelt beziehungsweise reagiert werden kann.

Gemäß einer weiteren Ausführungsform der vorliegenden Offenbarung ist das Radar-Messgerät derart ausgeführt, dass während der Messpausen zwischen den aufeinanderfolgenden Teil-Messintervallen kein Radar-Messsignal abgestrahlt wird.

Gemäß einer weiteren Ausführungsform der vorliegenden Offenbarung ist die Steuereinheit eingerichtet, den Frequenzdurchlauf schneller zu durchlaufen und gleichzeitig die Abtastfrequenz des Radar-Messsignals zu erhöhen, wenn die berechnete mittlere Sendeleistung größer ist als die voreingestellte Schwellwertleistung.

Um die mittlere Sendeleistung zu verringern, können demnach mehrere Vorkehrungen getroffen werden; einerseits die Zerlegung des Messintervalls in aufeinanderfolgende Teil-Messintervalle, die von entsprechenden Messpausen zeitlich voneinander getrennt sind, und andererseits schnelleren Durchlauf der Frequenzrampe bei gleichzeitiger Erhöhung der Abtastfrequenz des Radar-Messsignals.

Gemäß einer weiteren Ausführungsform der vorliegenden Offenbarung wird die maximale Sendeleistung des abzustrahlenden Radar-Messsignals nicht verändert, selbst wenn das Messintervall in mehrere aufeinanderfolgende Teil-Messintervalle aufgeteilt wird.

Die "maximale Sendeleistung des abzustrahlenden Radar-Messsignals" ist hierbei der maximale Wert der abzustrahlenden Sendeleistung. Im Idealfall schwankt die Sendeleistung nicht entlang der Frequenzrampe. Bei vielen Radar-Schaltkreisen gibt es aber die Möglichkeit, die Ausgangsleistung über einen steuerbaren Verstärker zu beeinflussen. Abhängig von der Applikation, der verwendeten Antenne oder der Funkzulassungs-Norm kann die Sendeleistung insgesamt (über die komplette Frequenzrampe auf den gleichen Wert) eingestellt werden.

Ein weiterer Aspekt der vorliegenden Offenbarung betrifft die Verwendung eines oben und im Folgenden beschriebenen Radar-Messgeräts zur Füllstandmessung oder Objektdetektion, beispielsweise bei der Überwachung eines Arbeitsbereichs.

Ein weiterer Aspekt der vorliegenden Offenbarung betrifft ein Verfahren zum Messen mit einem Radar-Messgerät zur Prozessautomatisierung im industriellen oder privaten Umfeld. Zunächst wird die mittlere Sendeleistung eines während eines Messintervalls abzustrahlenden Radar-Messsignals berechnet, woraufhin die berechnete mittlere Sendeleistung mit einer voreingestellten Schwellwertleistung verglichen wird. Wenn die berechnete mittlere Sendeleistung größer ist als die voreingestellte Schwellwertleistung, wird das Messintervall in zwei oder mehr aufeinanderfolgende Teil-Messintervalle aufgeteilt, die jeweils durch eine Messpause voneinander getrennt sind, um hierdurch die mittlere Sendeleistung des abzustrahlenden Radar-Messsignals zu verringern, so dass sie unter den voreingestellten Schwellwert fällt.

Ein weiterer Aspekt der vorliegenden Offenbarung betrifft ein Programmelement, das, wenn es auf einer Steuereinheit eines Radar-Messgeräts ausgeführt wird, das Radar-Messgerät anleitet, die oben und im Folgenden beschriebenen Schritte auszuführen.

Ein weiterer Aspekt der vorliegenden Offenbarung betrifft ein computerlesbares Medium, auf dem ein oben beschriebenes Programmelement gespeichert ist.

Unter dem Begriff "Prozessautomatisierung im industriellen Umfeld" kann ein Teilgebiet der Technik verstanden werden, welches Maßnahmen zum Betrieb von Maschinen und Anlagen ohne Mitwirkung des Menschen beinhaltet. Ein Ziel der Prozessautomatisierung ist es, das Zusammenspiel einzelner Komponenten einer Werksanlage in den Bereichen Chemie, Lebensmittel, Pharma, Erdöl, Papier, Zement, Schifffahrt oder Bergbau zu automatisieren. Hierzu können eine Vielzahl an Sensoren eingesetzt werden, welche insbesondere an die spezifischen Anforderungen der Prozessindustrie, wie bspw. mechanische Stabilität, Unempfindlichkeit gegenüber Verschmutzung, extremen Temperaturen und extremen Drücken, angepasst sind. Messwerte dieser Sensoren werden üblicherweise an eine Leitwarte übermittelt, in welcher Prozessparameter wie Füllstand, Grenzstand, Durchfluss, Druck oder Dichte überwacht und Einstellungen für die gesamte Werksanlage manuell oder automatisiert verändert werden können.

Ein Teilgebiet der Prozessautomatisierung im industriellen Umfeld betrifft die Logistikautomation von Anlagen und die Logistikautomation von Lieferketten. Mit Hilfe von Distanz- und Winkelsensoren werden im Bereich der Logistikautomation Abläufe innerhalb oder außerhalb eines Gebäudes oder innerhalb einer einzelnen Logistikanlage automatisiert. Typische Anwendungen finden z.B. Systeme zur Logistikautomation im Bereich der Gepäck- und Frachtabfertigung an Flughäfen, im Bereich der Verkehrsüberwachung (Mautsysteme), im Handel, der Paketdistribution oder aber auch im Bereich der Gebäudesicherung (Zutrittskontrolle). Gemein ist den zuvor aufgezählten Beispielen, dass eine Präsenzerkennung in Kombination mit einer genauen Vermessung der Größe und der Lage eines Objektes von der jeweiligen Anwendungsseite gefordert wird. Hierfür können Sensoren auf Basis optischer Messverfahren mittels Laser, LED, 2D-Kameras oder 3D-Kameras, die nach dem Laufzeitprinzip (time of flight, ToF) Abstände erfassen, verwendet werden.

Ein weiteres Teilgebiet der Prozessautomatisierung im industriellen Umfeld betrifft die Fabrik-/Fertigungsautomation. Anwendungsfälle hierzu finden sich in den unterschiedlichsten Branchen wie Automobilherstellung, Nahrungsmittelherstellung, Pharmaindustrie oder allgemein im Bereich der Verpackung. Ziel der Fabrikautomation ist, die Herstellung von Gütern durch Maschinen, Fertigungslinien und/oder Roboter zu automatisieren, d. h. ohne Mitwirkung des Menschen ablaufen zu lassen. Die hierbei verwendeten Sensoren und spezifischen Anforderungen im Hinblick auf die Messgenauigkeit bei der Erfassung der Lage und Größe eines Objektes sind mit denen der im vorigen Beispiel der Logistikautomation vergleichbar.

Die in den Ansprüchen verwendeten Begriffe sollten so ausgelegt werden, dass sie die weitestmögliche vernünftige Interpretation in Übereinstimmung mit der vorstehenden Beschreibung erhalten. Zum Beispiel sollte die Verwendung des Artikels "ein" oder "der" bei der Einführung eines Elements nicht so ausgelegt werden, dass sie eine Vielzahl von Elementen ausschließt. Ebenso sollte die Erwähnung von "oder" so ausgelegt werden, dass sie eine Vielzahl von Elementen einschließt, so dass die Erwähnung von "A oder B" nicht "A und B" ausschließt, es sei denn, aus dem Kontext oder der vorangehenden Beschreibung geht klar hervor, dass nur eines von A und B gemeint ist. Ferner ist die Formulierung "mindestens eines von A, B und C" als eines oder mehrere Elemente aus einer Gruppe von Elementen zu verstehen, die aus A, B und C besteht, und nicht so auszulegen, dass mindestens eines von jedem der aufgeführten Elemente A, B und C erforderlich ist, unabhängig davon, ob A, B und C als Kategorien oder auf andere Weise miteinander verbunden sind. Darüber hinaus sollte die Erwähnung von "A, B und/oder C" oder "mindestens eines von A, B oder C" so ausgelegt werden, dass sie jede einzelne Einheit der aufgeführten Elemente, z. B. A, jede Teilmenge der aufgeführten Elemente, z. B. A und B, oder die gesamte Liste der Elemente A, B und C umfasst.

Im Folgenden werden mit Verweis auf die Figuren weitere Ausführungsformen der vorliegenden Offenbarung beschrieben. Die Darstellungen in den Figuren sind schematisch und nicht maßstäblich. Werden in der folgenden Figurenbeschreibung die gleichen Bezugszeichen verwendet, so bezeichnen diese gleiche oder ähnliche Elemente.

### Kurze Beschreibung der Figuren

Fig. 1 zeigt einen Frequenzsweep, der in mehrere Teil-Frequenzsweeps zerlegt wird.
Fig. 2 zeigt ein weiteres Beispiel für eine solche Zerlegung.
Fig. 3 zeigt ein weiteres Beispiel für eine solche Zerlegung.
Fig. 4 zeigt ein Radar-Messgerät gemäß einer Ausführungsform der vorliegenden Offenbarung.
Fig. 5 zeigt ein Flussdiagramm eines Verfahrens gemäß einer Ausführungsform der vorliegenden Offenbarung.

### Detaillierte Beschreibung von Ausführungsformen

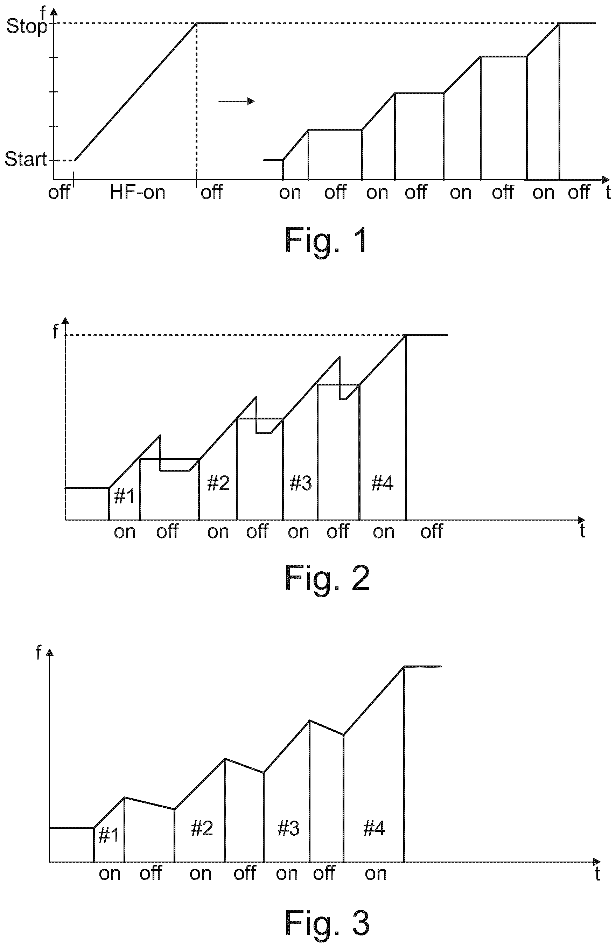

Fig. 1 zeigt auf der linken Seite einen Frequenzdurchlauf (Frequenzsweep), der die Frequenz des von einem Radar-Messgerät abzustrahlenden Radar-Messsignals in Abhängigkeit von der Zeit zeigt.

Im sogenannten Off-Bereich liegt kein Radar-Messsignal an der Antenne des Radarmesssignal an. Im darauffolgenden HF-ON-Bereich startet die Messung und das abzustrahlende Radar-Messsignal wird linear angefangen von einer Startfrequenz bis hin zu einer Stoppfrequenz über die Zeit hochgefahren. In diesem Zusammenhang spricht man auch von einer sogenannten Frequenzrampe, die durchlaufen wird. Am Ende der Frequenzrampe stoppt der Frequenzsweep und es beginnt wieder eine Off-Phase, an der kein Signal durch die Antenne abgestrahlt wird.

Im rechten Teil der Fig. 1 sieht man nun, wie diese Frequenzrampe in mehrere Teil-Frequenzrampen oder Teil-Messintervalle aufgeteilt werden kann, die jeweils über eine Off-Phase voneinander getrennt sind. Während dieser Off-Phasen, auch Messpausen genannt, wird kein Radar-Messsignal abgestrahlt.

In anderen Worten wird der Frequenzsweep auf mehrere Teil-Sweeps aufgeteilt. Ein 8-GHz-Hub mit einer Sweepzeit von 2 ms wird beispielsweise in vier Teilabschnitte unterteilt. Ein Teil-Sweep ist somit 0,5 ms lang, gefolgt von einer 0,5 ms langen Pause. Die gesamte Bandbreite wird somit in 4 ms realisiert.

Die Anzahl der Teil-Messintervalle (Teil-Sweeps) liegt beispielsweise zwischen 2 und 10 Teil-Messintervallen. Es können aber auch mehr Teil-Messintervalle vorgesehen sein, was zu kürzeren Messpausen zwischen den benachbarten Teil-Messintervallen führen kann. Die Messintervalle können gleichlang oder auch unterschiedlich lang ausgeführt sein. In Fig. 1 sind diese auch nicht gleich lang eingezeichnet.

Es kann vorgesehen sein, dass die Teil-Sweeps einander überlappen, um zum Beispiel Einschwingeffekte zu verringern. Die Software muss dann die überlappenden Punkte kennen und beim Zusammensetzen aussparen. Dies ist in den Fig. 2 und 3 gezeigt.

In diesen Fällen sind unterschiedliche Vorgehensweisen möglich: Die steuernde Phasenregelschleife (PLL) bleibt immer aktiv oder wird zwischenzeitlich komplett abgeschaltet. Falls überlappende Teil-Sweeps realisiert werden, kann die PLL auch in einer Abwärtsrampe die neue Startfrequenz anfahren und dann den Sweep wieder fortsetzen. Dies ist in Fig. 3 gezeigt. Hierdurch kann sich die "Anlaufzeit" der PLL, also die Startup-Phase und die Einregel-Phase auf die Startfrequenz, entfallen oder verkürzt werden. Zudem bleibt der nachfolgende VCO nicht auf einer Frequenz stehen, was innerhalb des Gerätes zu Störbeeinflussungen führen könnte.

Der PLL ist im Regelfall immer ein VCO nachgeschaltet. Dieser kann in den Mess-Sweep-pausen ebenfalls wahlweise mit abgeschaltet oder aktiv bleiben. Auch hier sind eine Vielzahl von Realisierungsformen möglich.

Es sind also viele Ausgestaltungsformen möglich und vorgesehen. Wichtig ist, dass zu den "Off-Phasen" (Messpausen) die HF-Sendesignale nicht an die Antenne gelangen, so dass kein Radar-Messsignal abgestrahlt wird.

Wenn in einem Radar-Messgerät mehrere verschiedene Frequenzhübe/Bandbreiten realisiert werden, kann das Aufteilen in mehrere Teil-Sweeps auch variabel sein. Das bedeutet, die Software kann eingerichtet sein, je nach eingestelltem Frequenzhub zu entscheiden, wie viele Teil-Sweeps zu realisieren sind.

Dieses automatisierte Verfahren kann auch abhängig von der geltenden Funkzulassung (Länder-Abhängigkeit) angewandt werden. Ist der Grenzwert hoch genug, kann eventuell in einem Sweep gemessen werden; andernfalls muss aufgeteilt werden. Hier kann die tatsächlich gesendete Leistung auch überwacht werden, beispielsweise über einen Power-Detektor. Dieser gemessene Wert kann als Eingangsgröße des automatisierten Verfahrens verwendet werden.

In den Pausenzeiten kann die Frequenz auch minimal werden (= Startfrequenz des ersten Teilsweeps oder Frequenz des nachfolgenden VCOs bei Tuning-Spannung = 0V). Generell kann die Frequenz in den Sendepausen fest einstellbar oder variabel (festgelegt oder frei) sein. Es kann auch eine Mischung aus Sweep-Aufteilung und Reduzierung der Sendeleistung realisiert werden. Insbesondere ist eine Kombination abhängig von Anwendung, Funkzulassung und zur Verfügung stehender maximaler HF-Sendeleistung möglich. Eine Sweep-Unterbrechung vor dem Erreichen der maximal möglichen mittleren Sendeleistung kann erklärtes Ziel sein. In diesem Fall kann auch ein "Sicherheitsabstand" vorgesehen sein.

In anderen Worten kann die Steuereinheit insbesondere eingerichtet sein, die mittlere Sendeleistung, die bereits abgestrahlt wurde, laufend zu berechnen und den Frequenzdurchlauf rechtzeitig vor Erreichen der maximal zulässigen mittleren Sendeleistung durch das Einlegen einer Messpause zu unterbrechen.

Eine Sweep-Aufteilung kann auch aus energetischen Gründen vorgesehen sein, wenn zum Beispiel die Energie des Sensors knapp ist oder knapp wird. In dieser Betrachtung ist mit einzubeziehen, dass der erforderliche Energiespeicher im Radar-Messgerät bei kurzen Sweeps (oder Teil-Sweeps) kleiner gewählt werden kann.

Eine Sweep-Aufteilung kann auch dann erforderlich werden, wenn die PLL und/oder der nachgeschaltete VCO keine so schnellen Rampen erzeugen können, wie das erforderlich wäre. Muss das System aus solchen Gründen "verlangsamt" werden, sind große Frequenzrampen (große Radar-Bandbreite) nur mit langen Sweepzeiten realisierbar, die evtl. energetisch oder funkzulassungstechnisch nicht vereinbar sind.

In diesem Zusammenhang soll beachtet werden, dass in der vorliegenden Offenbarung die Begriffe Teil-Sweep und Teil-Messintervall einander entsprechen.

In dem automatisierten Messverfahren kann auch die Abtastfrequenz mitberücksichtigt werden. So kann bei Bedarf die Frequenzrampe schneller oder kürzer realisiert sein; auch kann die Abtastrate nach Möglichkeit ebenso hochgesetzt werden und dadurch die gleiche Abtastpunkte-Anzahl erhalten werden. Diese Variante ist insbesondere möglich, wenn der Analog-Digital-Wandler schnell genug wandeln kann.

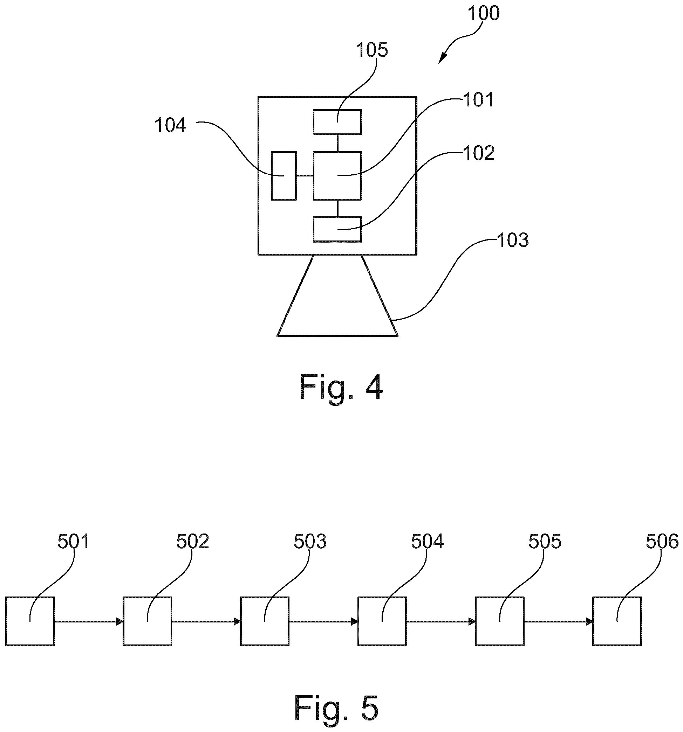

Fig. 4 zeigt ein Radar-Messgerät 100 gemäß einer Ausführungsform der vorliegenden Offenbarung. Das Radar-Messgerät 100 ist als FMCW-Füllstand-Radar-Messgerät ausgeführt und weist neben der Steuereinheit 101 und dem Radarmodul 102 eine Antenne 103 auf, welche das Radar-Messsignal abstrahlt und das reflektierte RadarMesssignal wieder empfängt.

Darüber hinaus weist das Radar-Messgerät 100 einen Power-Detektor 104 und einen Datenspeicher 105 auf. Die Phasenregelschleife (PLL) ist Teil der Steuereinheit 101 oder des Radarmoduls 102.

Fig. 5 zeigt ein Flussdiagramm eines Verfahrens gemäß einer Ausführungsform der vorliegenden Offenbarung. In Schritt 501 erfolgt das Berechnen einer mittleren Sendeleistung eines während eines Messintervalls abzustrahlenden Radar-Messsignals. In Schritt 502 wird die berechnete mittlere Sendeleistung mit einer voreingestellten Schwellwertleistung verglichen und in Schritt 503 wird das Messintervall in mehrere aufeinanderfolgende Teil-Messintervalle aufgeteilt, da die berechnete mittlere Sendeleistung größer ist als die voreingestellte Schwellwertleistung. In Schritt 504 werden die aufeinanderfolgenden Teil-Messintervalle jeweils durch eine Messpause voneinander getrennt, um die mittlere Sendeleistung des abzustrahlenden Radar-Messsignals zu verringern, so dass sie unter den voreingestellten Schwellwert fällt. In Schritt 505 wird das Radar-Messsignal während der aufeinanderfolgenden Teil-Messintervalle abgestrahlt. Die abgestrahlten Radarsignale werden beispielsweise an der Füllgutoberfläche reflektiert und in Schritt 506 wieder von der Antenne des Radar-Messgeräts empfangen und von der Steuereinheit "zusammengesetzt", um daraus den Füllstand zu berechnen.

Zusätzlich zur Aufteilung des Messintervalls in Teil-Messintervalle und das Einfügen von Messpausen dazwischen kann die Sweepzeit auch insgesamt verringert werden. Daraus resultiert eine verringerte Abtastpunkte-Anzahl bei gleicher Abtastrate. Auch kann zusätzlich der Frequenzhub oder die Bandbreite reduziert werden. Zusätzlich kann auch die Sendeleistung insgesamt reduziert werden. Auch kann, und das wurde schon weiter oben beschrieben, die Steigung der Frequenzrampen erhöht werden, um die Messzeit zu verringern, bei gleichzeitiger Vergrößerung der Messpausen zwischen den Teil-Messintervallen.

## Patentansprüche

1. Radar-Messgerät (100), eingerichtet zur Prozessautomatisierung im industriellen oder privaten Umfeld, aufweisend:
eine Steuereinheit (101), eingerichtet zum Berechnen einer mittleren Sendeleistung eines während eines Messintervalls abzustrahlenden Radar-Messsignals;
wobei die Steuereinheit (101) eingerichtet ist, die berechnete mittlere Sendeleistung mit einer voreingestellten Schwellwertleistung zu vergleichen und das Messintervall in mehrere aufeinanderfolgende Teil-Messintervalle aufzuteilen, wenn die berechnete mittlere Sendeleistung größer ist als die voreingestellte Schwellwertleistung;
wobei die aufeinanderfolgenden Teil-Messintervalle jeweils durch eine Messpause voneinander getrennt sind, um die mittlere Sendeleistung des abzustrahlenden Radar-Messsignals zu verringern, so dass sie unter den voreingestellten Schwellwert fällt.

2. Radar-Messgerät (100) nach Anspruch 1, weiter aufweisend:
ein Radarmodul (102), eingerichtet zum Erzeugen und Abstrahlen des Radar-Messsignals während der aufeinanderfolgenden Teil-Messintervalle.

3. Radar-Messgerät (100) nach einem der vorhergehenden Ansprüche,
wobei das Radar-Messgerät (100) ein FMCW-Radar-Messgerät ist.

4. Radar-Messgerät (100) nach Anspruch 3,
wobei die Steuereinheit (101) eingerichtet ist, die Anzahl der Teil-Messintervalle in Abhängigkeit von der Größe des Frequenzhubs des gesamten Frequenzdurchlaufs des Messintervalls und/oder in Abhängigkeit von der maximalen Sendeleistung des abzustrahlenden Radar-Messsignals festzulegen, wenn das Messintervall in mehrere aufeinanderfolgende Teil-Messintervalle aufgeteilt wird.

5. Radar-Messgerät (100) nach Anspruch 3 oder 4,
wobei die Steuereinheit (101) eingerichtet ist, die Länge der Messpause zwischen zwei aufeinanderfolgenden Teil-Messintervallen in Abhängigkeit von der Größe des Frequenzhubs des gesamten Frequenzdurchlaufs des Messintervalls und/oder in Abhängigkeit von der maximalen Sendeleistung des abzustrahlenden Radar-Messsignals festzulegen, wenn das Messintervall in mehrere aufeinanderfolgende Teil-Messintervalle aufgeteilt wird.

6. Radar-Messgerät (100) nach einem der Ansprüche 3 bis 5,
wobei die Steuereinheit (101) eingerichtet ist, die Steigung der Frequenzrampe des Frequenzdurchlaufs zu verringern, wenn das Messintervall in mehrere aufeinanderfolgende Teil-Messintervalle aufgeteilt wird.

7. Radar-Messgerät (100) nach einem der vorhergehenden Ansprüche,
wobei während der Messpausen zwischen den aufeinanderfolgenden Teil-Messintervallen kein Radar-Messsignal abgestrahlt wird.

8. Radar-Messgerät (100) nach einem der Ansprüche 3 bis 7,
wobei die Steuereinheit (101) eingerichtet ist, den Frequenzdurchlauf schneller zu durchlaufen und gleichzeitig die Abtastfrequenz des Radar-Messsignals zu erhöhen, wenn die berechnete mittlere Sendeleistung größer ist als die voreingestellte Schwellwertleistung.

9. Radar-Messgerät (100) nach einem der vorhergehenden Ansprüche,
wobei die maximale Sendeleistung des abzustrahlenden Radar-Messsignals nicht verändert wird, selbst wenn das Messintervall in mehrere aufeinanderfolgende Teil-Messintervalle aufgeteilt wird.

10. Verwendung eines Radar-Messgeräts (100) nach einem der vorhergehenden Ansprüche zur Füllstandmessung.

11. Verwendung eines Radar-Messgeräts (100) nach einem der vorhergehenden Ansprüche zur Objektdetektion oder Raumüberwachung.

12. Verfahren zum Messen mit einem Radar-Messgerät (100) zur Prozessautomatisierung im industriellen oder privaten Umfeld, aufweisend die Schritte:
Berechnen einer mittleren Sendeleistung eines während eines Messintervalls abzustrahlenden Radar-Messsignals;
Vergleichen der berechneten mittleren Sendeleistung mit einer voreingestellten Schwellwertleistung;
Aufteilen des Messintervalls in mehrere aufeinanderfolgende Teil-Messintervalle, wenn die berechnete mittlere Sendeleistung größer ist als die voreingestellte Schwellwertleistung;
wobei die aufeinanderfolgenden Teil-Messintervalle jeweils durch eine Messpause voneinander getrennt sind, um die mittlere Sendeleistung des abzustrahlenden Radar-Messsignals zu verringern, so dass sie unter den voreingestellten Schwellwert fällt.

13. Programmelement, das, wenn es auf einer Steuereinheit (101) eines Radar-Messgeräts (100) ausgeführt wird, das Radar-Messgerät (100) anleitet, die Schritte nach Anspruch 12 auszuführen.

14. Computerlesbares Medium, auf dem ein Programmelement nach Anspruch 13 gespeichert ist.
